# EUROPEAN PATENT APPLICATION

(11) **EP 3 694 096 A1**
(43) Date of publication of application: **12.08.2020**
(21) Application number: 19215589.3
(22) Date of filing: 12.12.2019
(51) Int. Cl.: H02M 7/487, H02M 1/32

(54) **THREE-LEVEL PULSE WIDTH MODULATION TECHNIQUE FOR REDUCING SEMICONDUCTOR SHORT CIRCUIT CONDUCTION LOSS**

(30) Priority: 05.02.2019 US 201916268225
(71) Applicant: Hamilton Sundstrand Corporation, Charlotte, NC 28217-4578 (US)
(72) Inventor: THOMPSON, Ernest, Janesville, WI 53546 (US); WHITE, Adam Michael, Cherry Vallry, IL 61016 (US); SCHMITT, Dwight D., Rockford, IL 61108 (US)
(74) Representative: Dehns

(57) **Abstract**

A converter implementing a dual-reference three-level pulse width modulation (PWM) technique for constraining a midpoint duty cycle is provided. The converter includes a phase leg (240) that includes upper, mid-upper, mid-lower, and lower switches (242, 244, 246, 248). The upper, mid-upper, mid-lower, and lower switches are connected in series between direct current (DC) positive (128) and negative (132) leads, with an alternating current (AC) output lead connected at a junction of the mid-upper and mid-lower switches. The phase leg includes a first clamping diode (250) connected to the junction of the switch and mid-upper switches and connected to a DC midpoint lead and a second clamping diode (252) connected between the DC midpoint lead and connected to the junction of the mid-lower and lower switches. The converter is electrically coupled to and operatively associated with a controller to receive control signals to drive the converter to constrain the midpoint duty cycle between the DC midpoint and AC output leads.

## Description

### BACKGROUND

Exemplary embodiments pertain to pulse width modulation (PWM).

When a load short circuit occurs on an output of a power electronic inverter, abnormally high output currents occur. For many applications, the power electronic inverter can be disabled within 100µs to protect itself from these high currents. When the power electronic inverter is the power source for an electric system, for instance as part of an aircraft variable speed, constant frequency (VSCF) system, the inverter must provide a short circuit current for a sustained period of time.

### BRIEF DESCRIPTION

In accordance with one or more embodiments, a converter implementing a dual-reference three-level pulse width modulation (PWM) technique for constraining a midpoint duty cycle is provided. The converter includes a phase leg including an upper switch; a mid-upper switch; a mid-lower switch; and a lower switch. The upper switch, the mid-upper switch, the mid-lower switch, and the lower switch are connected in series between a direct current (DC) positive lead and a DC negative lead, with an alternating current (AC) output lead connected at a junction of the mid-upper switch and the mid-lower switch. The phase leg includes a first clamping diode connected to the junction of the upper switch and the mid-upper switch and connected to a DC midpoint lead; and a second clamping diode connected between the DC midpoint lead and connected to the junction of the mid-lower switch and the lower switch. The converter is electrically coupled to and operatively associated with a controller to receive a plurality of control signals to drive the converter to constrain the midpoint duty cycle between the DC midpoint lead and the AC output lead.

In accordance with one or more embodiments or the converter embodiment above, the plurality of control signals can drive a reduction in conduction losses for the mid-upper switch, the mid-lower switch, the first clamping diode, and the second clamping diode during short circuit conditions.

In accordance with one or more embodiments or any of the converter embodiments above, the midpoint duty cycle can be a proportion of time within a switching cycle current is conducted between the DC midpoint lead and the AC output lead, and the plurality of control signals can be determined such that a duration of time within each switching cycle of the converter that the phase leg conducts the current between the DC midpoint lead and the AC output lead is constrained to a pre-determined value.

In accordance with one or more embodiments or any of the converter embodiments above, the converter can be a multi-phase converter including a plurality of phase legs, each of the plurality of phase legs being structurally similar comprising the midpoint duty cycle as a proportion of time within a switching cycle current is conducted between corresponding DC midpoint and the AC output leads, and the plurality of control signals can be determined such that a duration of time within each switching cycle of the multi-phase converter that the plurality of phase legs conduct current between the DC midpoint lead and the AC output lead is constrained to a same pre-determined value for all phase legs.

In accordance with one or more embodiments or any of the converter embodiments above, the plurality of control signals can drive a reduction in a peak die temperature for the mid-upper switch, the mid-lower switch, the first clamping diode, and the second clamping diode during short circuit conditions.

In accordance with one or more embodiments or any of the converter embodiments above, the plurality of control signals drive can a reduction in ampacity required for the mid-upper switch, the mid-lower switch, the first clamping diode, and the second clamping diode.

In accordance with one or more embodiments or any of the converter embodiments above, the converter can include a multilevel neutral-point-clamped inverter connected to a DC power source with the DC positive lead and the DC negative lead.

In accordance with one or more embodiments or any of the converter embodiments above, the controller can reduce or cancel a midpoint current from the DC midpoint lead.

In accordance with one or more embodiments or any of the converter embodiments above, conduction losses for the first clamping diode and the mid-upper switch can be reduced and shared with the mid-lower switch and the lower switch of the phase leg when the voltage reference and output current are both positive.

In accordance with one or more embodiments, a power distribution system is provided. The power distribution system includes a direct current (DC) power source comprising a DC positive lead, a DC midpoint lead, and a DC negative lead; a controller providing a plurality of control signals; a converter implementing a dual-reference three-level pulse width modulation (PWM) technique for constraining a midpoint duty cycle, the converter being electrically coupled to and operatively associated with the controller to receive the plurality of control signals. The converter includes a phase leg including an upper switch; a mid-upper switch; a mid-lower switch; and a lower switch. The upper switch, the mid-upper switch, the mid-lower switch, and the lower switch are connected in series between a direct current (DC) positive lead and a DC negative lead, with an alternating current (AC) output lead connected at a junction of the mid-upper switch and the mid-lower switch. The phase leg includes a first clamping diode connected to the junction of the upper switch and the mid-upper switch and connected to a DC midpoint lead; and a second clamping diode connected between the DC midpoint lead and connected to the junction of the mid-lower switch and the lower switch. The converter is electrically coupled to and operatively associated with a controller to receive a plurality of control signals to drive the converter to constrain the midpoint duty cycle between the DC midpoint lead and the AC output.

In accordance with one or more embodiments or the power distribution system embodiment above, the plurality of control signals can drive a reduction in conduction losses for the mid-upper switch, the mid-lower switch, the first clamping diode, and the second clamping diode during short circuit conditions.

In accordance with one or more embodiments or any of the power distribution system embodiments above, the midpoint duty cycle can be a proportion of time within a switching cycle when current is conducted between the DC midpoint lead and the AC output lead, and wherein the plurality of control signals are determined such that a duration of time within each switching cycle of the converter that the phase leg conducts the current between the DC midpoint lead and the AC output lead is constrained to a pre-determined value.

In accordance with one or more embodiments or any of the power distribution system embodiments above, the converter can be a multi-phase converter comprising a plurality of phase legs, each of the plurality of phase legs being structurally similar comprising the midpoint duty cycle as a proportion of time within a switching cycle current is conducted between corresponding DC midpoint and the AC output leads, and the plurality of control signals can be determined such that a duration of time within each switching cycle of the multi-phase converter that the plurality of phase legs conduct current between the DC midpoint lead and the AC output lead is constrained to a same pre-determined value for all phase legs.

In accordance with one or more embodiments or any of the power distribution system embodiments above, the plurality of control signals can drive a reduction in a peak die temperature for the mid-upper switch, the mid-lower switch, the first clamping diode, and the second clamping diode during short circuit conditions.

In accordance with one or more embodiments or any of the power distribution system embodiments above, the plurality of control signals can drive a reduction in ampacity required for the mid-upper switch, the mid-lower switch, the first clamping diode, and the second clamping diode.

In accordance with one or more embodiments or any of the power distribution system embodiments above, the converter can be a multilevel neutral-point-clamped inverter connected to a DC power source with the DC positive lead and the DC negative lead.

In accordance with one or more embodiments or any of the power distribution system embodiments above, the controller can reduce or cancel a midpoint current from the DC midpoint lead.

In accordance with one or more embodiments or any of the power distribution system embodiments above, conduction losses for the first clamping diode and the mid-upper switch can be reduced and shared with the mid-lower switch and the lower switch of the phase leg when the voltage reference and output current are both positive.

Additional features and advantages are realized through the techniques of the present disclosure. Other embodiments and aspects of the disclosure are described in detail herein. For a better understanding of the disclosure with the advantages and the features, refer to the description and to the drawings.

### BRIEF DESCRIPTION OF THE DRAWINGS

The following descriptions should not be considered limiting in any way. With reference to the accompanying drawings, like elements are numbered alike:
FIG. 1 depicts a power distribution system according to one or more embodiments;
FIG. 2 depicts a converter control system according to one or more embodiments; and
FIG. 3 depicts operational examples of a phase leg of a converter according to one or more embodiments.

### DETAILED DESCRIPTION

A detailed description of one or more embodiments of the disclosed apparatus and method are presented herein by way of exemplification and not limitation with reference to the Figures.

Turning now to an overview of technologies that are more specifically relevant to aspects of the invention, as discussed above, a sustained short circuit current duration is needed to ride-through the sustained period of time necessary for downstream fuses to clear or breakers to trip near the fault. When system protections are properly coordinated, this allows for isolation of the fault and continuity of power to other loads on the bus or buses powered by a source (e.g., the power electronic inverter).

For example, in aircraft VSCF sources, a typical short circuit current duration requirement is five seconds. That is, a VSCF converter must provide a specified short circuit current for five seconds. This short circuit current may be several times the normal operating current. Thermal time constants for the power module semiconductors (e.g., insulated-gate bipolar transistors, metal-oxide-semiconductor field-effect transistors, diodes, etc.), will generally be less than one second. Therefore, during the five second short circuit event, semiconductor temperatures will rapidly increase. This condition will result in the highest semiconductor temperatures encountered during expected operating conditions, and therefore determine how much power module ampacity is required, driving power module sizing.

Turning now to an overview of the aspects of the invention, one or more embodiments of the invention address the above-described shortcomings of the prior art by providing a three-level pulse width modulation technique for reducing semiconductor short circuit conduction loss. Further, one or more embodiments of the invention provide a dual-reference three-level PWM technique for constraining a midpoint duty cycle to a pre-determined value.

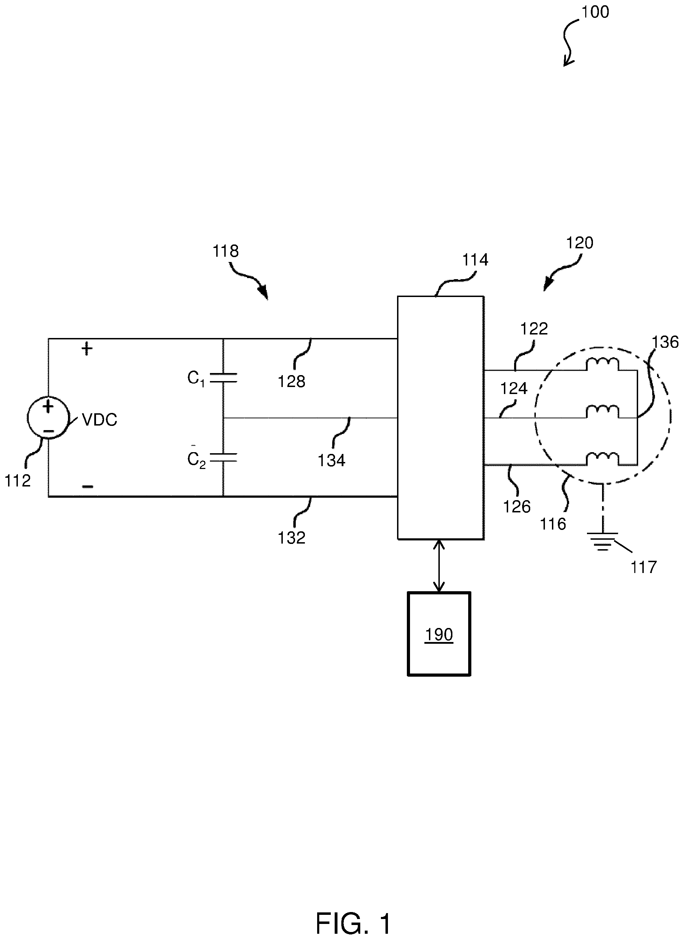

Referring now to FIG. 1, a power distribution system 100 is shown according to one or more embodiments. The power distribution system 100 includes a direct current (DC) power source 112 (e.g., volts DC (VDC)), a converter 114, and an electrical load 116. A DC link 118 with a plurality of leads couples the DC power source 112 to the converter 114. An alternating current (AC) link 120 connects the converter 114 with the electrical load 116.

As shown, the electrical load 116, which is grounded 117, can be a three-phase AC load connected to converter 114 with an A-phase lead 122, a B-phase lead 124, and a C-phase lead 126. In accordance with one or more embodiments, the converter 114 can be a multilevel neutral-point-clamped inverter connected to the DC power source 112 with a DC positive lead 128, and a DC negative lead 132. A first balancing capacitor C₁ is connected in series between DC positive lead 128 and a DC midpoint lead 134. A second balancing capacitor C₂ is connected in series between DC negative lead 132 and DC midpoint lead 134. Note that voltage between terminals is illustrated with a demarcation 136. Further, note that the converter 114 includes a controller electrically coupled to and operatively associated with the converter 114 to reduce (or cancel) midpoint current from the DC midpoint lead 134.

The power distribution system 100 also includes a controller 190. As shown, the controller 190 is electrically coupled to (and integrated with) the converter 114, however this example is not indented to be limiting. The controller 190 is operatively connected to each of the solid-state switching devices of converter 114 for selectively connecting each of AC phase leads (e.g., the A-phase lead 122, the B-phase lead 124, and the C-phase lead 126) with one of the DC leads (e.g., the DC positive lead 128, the DC midpoint lead 134, and the DC negative lead 132) at a given moment in time for synthesizing AC power with predetermined frequency using DC input power. In this respect, command signals generated by the controller 190 are used to control the AC output voltages generated by converter 114. For example, the controller 190 selectively connects each AC output voltage to the positive DC lead 128, the DC negative lead 132, or the DC midpoint lead 134 as required to generate the desired AC output waveforms.

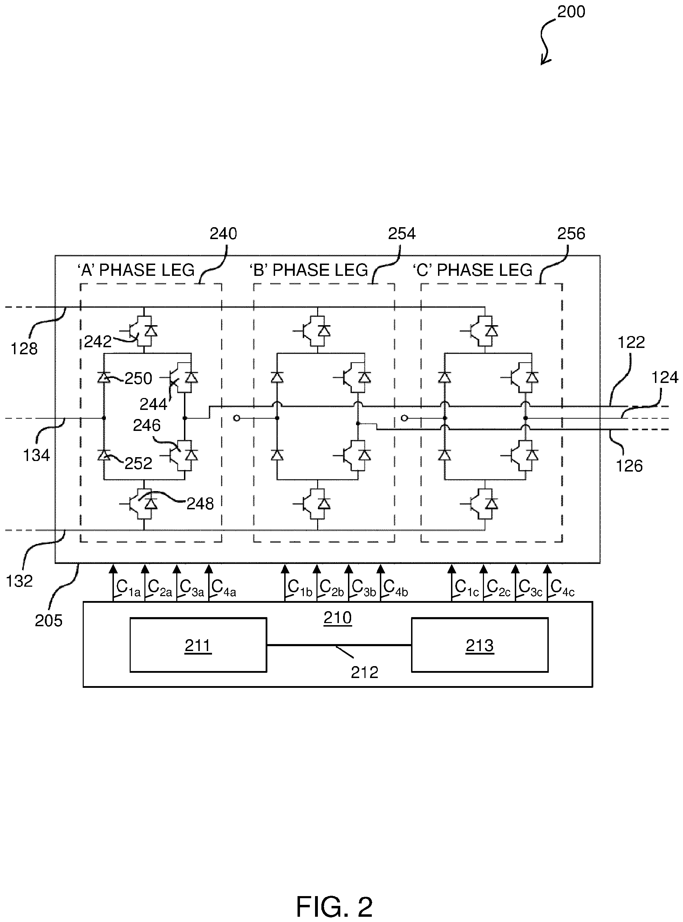

With reference to FIG. 2, a more detailed view of the converter 114 of FIG. 1 is shown in accordance with one or more embodiments. In accordance with one or more embodiments, FIG. 2 depicts a converter control system 200 comprising the converter 205 and the controller 210 (e.g., the converter 114 and the controller 190, respectively, of FIG. 1). Note that similar items between the FIGS. are reused for brevity herein.

The controller 210 can be an electronic, computer framework comprising and/or employing any number and combination of computing technologies, as described herein. The controller 210 has a processor 211, which can include one or more central processing units (CPUs). The processor 211, also referred to as a processing circuit, microprocessor, computing unit, is coupled via a system bus 212 to a system memory 213 and various other components. The system memory 213 can include read only memory (ROM) and/or random access memory (RAM). The controller 210 can send control signals (e.g., C₁ₐ to C₄ₐ; C_{1b} to C_{4b}; and C_{1c}, to C_{4c}) to the converter 205 to cause the converter 205 to operate according to embodiments herein.

The converter 205 generally includes a plurality of solid-state switches connected in series with one another and having freewheeling diodes connected in parallel with each switch. Clamping diodes are also arranged in series between phase legs and DC midpoint lead 134. In this respect, an A-phase leg 240 includes an upper switch 242, a mid-upper switch 244, a mid-lower switch 246, and a lower switch 248 that each connected in series with one another between DC positive lead 128 and DC negative lead 132. A first clamping diode 250 is connected in series between upper switch 242 and DC midpoint lead 134, and a second clamping diode 252 is connected is series between lower switch 248 and DC midpoint lead 134. A-phase lead 122 is connected between mid-upper switch 244 and mid-lower switch 246. A B-phase leg 254 and a C-phase leg 256 are similar in arrangement as the A-phase leg 240 with the distinction that the B-phase leg 254 is connected to the B-phase lead 124 and the C-phase leg 256 is connected to C-phase lead 126.

In accordance with one or more embodiments, the selection of the control signals (e.g., C₁ₐ to C₄ₐ; C_{1b} to C_{4b}; and C_{1c} to C_{4c}) by the controller 210 enables a reduction in conduction losses for the components of the converter 205 during short circuit conditions (low modulation depth and high current); reduction in the peak die temperature for the components of the converter 205 during short circuit conditions (low modulation depth and high current), for a given power module; and reduction in the ampacity required for the components of the converter 205 in a power module design necessary to meet short circuit design requirements.

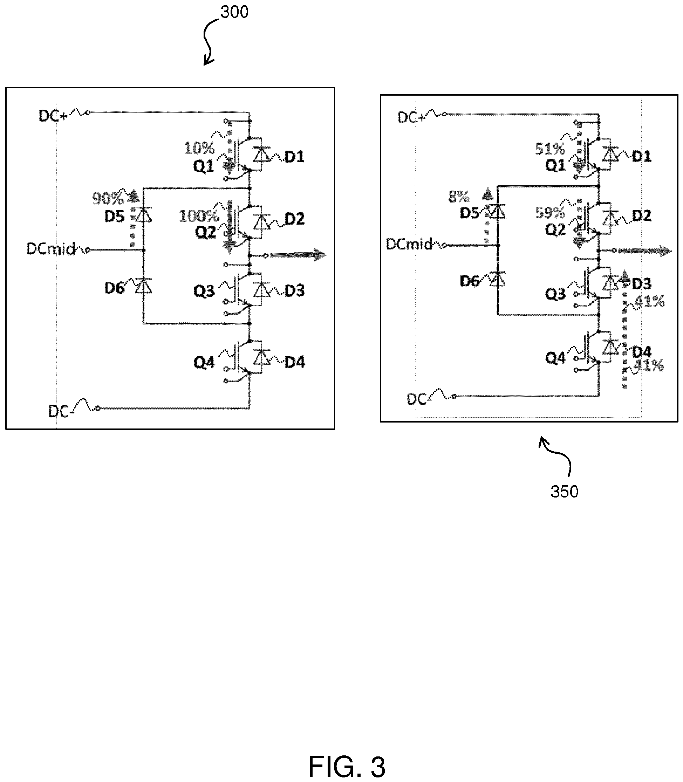

FIG. 3 depicts operational examples of a phase leg of the converter 205 of FIG. 2 according to one or more embodiments. Each of the operational examples 300 and 350 include a plurality of semiconductors, such as a plurality of diodes D1-D6 and a plurality of transistors Q1-Q4 electrically coupled and arranged with respect to a plurality of terminals DC+, DC-, and DCmid.

The operational example 300 of FIG. 3 is now described. For three-level inverters with short circuit current supply requirements, the semiconductors are increased substantially in ampacity, relative to the ampacity required for normal operation, to keep device temperatures within limits during short circuit events. In turn, a larger power module size is used to fit in more paralleled semiconductor die. During a short circuit event, a low short-circuit output impedance is presented to the inverter. Due to the low impedance, the output voltage is reduced to regulate a short circuit current to the value required by the application. Note that an inverter modulation index is very low since the output voltage is reduced (e.g., a value less than 10% is common).

In some cases, three-level power converters use a PWM in which the output current is commutated between two paths within each PWM cycle. If this three-level PWM is used and the modulation index is 10%, then the reference voltage is +0.1^{∗}(Vdc/2) at the positive peak of the sinusoidal voltage reference waveform, corresponding to a 10% transistor Q1 duty cycle, as shown in the operational example 300 of FIG. 3.

In the operational example 300, more particularly, the conduction durations in percent are shown, assuming a positive (outgoing) inverter current. Transistor Q2 conducts for 100% of the switching period. During transistor Q1 switching, current commutates between transistor Q1 and diode D5, with diode D5 conducting for 90% of the switching period and transistor Q1 for 10%. Transistor Q2 and diode D5 conduction losses are very high due to their long conduction periods. For negative (incoming) inverter current, transistor Q3 and diode D6 conduction losses are very high, as opposed to the high Q2 and D5 conduction losses in the positive current case.

The operational example 350 of FIG. 3 is now described. Note that the operational example 350 of FIG. 3 is based on a selection of the control signals (e.g., C₁ₐ to C₄ₐ; C_{1b} to C_{4b}; and C_{1c} to C_{4c}) to drive the plurality of transistors Q1-Q4 over a time varying instance.

In the operational example 350, a dual-reference three-level PWM technique is used to commutate the load current between three paths within each PWM cycle (such as by constraining a midpoint duty cycle to a pre-determined value). More particularly, this dual-reference three-level PWM technique is tailored to "share" thermal stresses between semiconductor devices during short circuit conditions, as described herein. The introduction of an additional current commutation during each PWM cycle increases module switching losses, however worst-case device conduction losses is greatly reduced.

For instance, this particular dual-reference three-level PWM technique constrains to a predetermined value the proportion of time that the output current flows from the DCmid terminal. This proportion of time is referred to as the midpoint duty cycle (e.g., is a proportion of time within a switching cycle current is conducted between the DC midpoint lead and the AC output lead). By constraining the midpoint duty cycle, the thermal stresses on transistor Q2, transistor Q3, diode D5 and diode D6 are reduced.

In the operational example 350, the subject dual-reference three-level PWM technique utilizes the same +0.1^{∗}(Vdc/2) voltage reference as the operational example 300; note that the +0.1^{∗}(Vdc/2) voltage reference corresponds to the peak of a sinusoidal reference at 10% modulation index. The predetermined value of midpoint duty cycle in the operational example 350 is chosen as 8%, although a smaller or larger numbers can be used. For instance, the smaller the midpoint duty cycle, the less the thermal stresses on transistor Q2, transistor Q3, diode D5 and diode D6. However, the midpoint duty cycle is kept greater than 0, so that a minimum time is spent in the midpoint state between DC- terminal to DC+ terminal (and vice-versa) transitions.

In the operational example 350, the conduction durations in percent are shown, assuming a positive (outgoing) inverter current. These durations (conduction losses) can be compared to those in the operational example 350. With this dual-reference three-level PWM technique, the conduction losses for diode D5 and transistor Q2 are now reduced and "shared" with diode D3 and diode D4 when the voltage reference and output current are both positive. This greatly reduces the maximum diode D5 and transistor Q2 die temperature for a given power module.

Accordingly, if the voltage reference has a small negative value (e.g. at the negative peak of a 10% modulation depth voltage reference) and if the inverter current flow is negative, then conduction losses of the transistor Q3 and the diode D6 are reduced. If the voltage reference has a different sign than inverter current flow, then D3 conduction loss reduced for positive current flow and D2 conduction loss is reduced for negative current flow.

In view of the above, the technical effects and benefits of the operational example 350 of this dual-reference three-level PWM technique include, but are not limited to, a reduction in the conduction losses for transistor Q2 and diode D2 (e.g., the mid-upper switch 244), transistor Q3 and diode D3 (e.g., the mid-lower switch 246), diode D5 (e.g., the first clamping diode 250), and diode D6 (e.g., the second clamping diode 252) during short circuit conditions (low modulation depth and high current); a reduction in the peak die temperature for transistor Q2, transistor Q3, diode D2, diode D3, diode D5, and diode D6 during short circuit conditions (low modulation depth and high current), for a given power module; and a reduction in the ampacity required for transistor Q2, transistor Q3, diode D2, diode D3, diode D5, and diode D6 in a power module design necessary to meet short circuit design requirements.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the invention as defined by the claims. In addition, many modifications may be made to adapt a particular situation or material to the teachings of the present disclosure without departing from the scope of the invention. Therefore, it is intended that the present disclosure not be limited to the particular embodiment disclosed as the best mode contemplated for carrying out this present disclosure, but that the present disclosure will include all embodiments falling within the scope of the claims.

## Claims

1. A converter implementing a dual-reference three-level pulse width modulation (PWM) technique for constraining a midpoint duty cycle, the converter comprising:
a phase leg (240) comprising:
an upper switch (242);
a mid-upper switch (244);
a mid-lower switch (246);
a lower switch (248);
wherein the upper switch, the mid-upper switch, the mid-lower switch, and the lower switch are connected in series between a direct current, DC, positive lead (128) and a DC negative lead (132), with an alternating current, AC, output lead connected at a junction of the mid-upper switch and the mid-lower switch;
a first clamping diode (250) connected to the junction of the upper switch and the mid-upper switch and connected to a DC midpoint lead; and
a second clamping diode (252) connected between the DC midpoint lead and connected to the junction of the mid-lower switch and the lower switch,
wherein the converter is electrically coupled to and operatively associated with a controller to receive a plurality of control signals to drive the converter to constrain the midpoint duty cycle between the DC midpoint lead and the AC output lead.

2. The converter of claim 1, wherein the plurality of control signals drive a reduction in conduction losses for the mid-upper switch, the mid-lower switch, the first clamping diode, and the second clamping diode during short circuit conditions.

3. The converter of any preceding claim, wherein the midpoint duty cycle is a proportion of time within a switching cycle current is conducted between the DC midpoint lead and the AC output lead, and wherein the plurality of control signals are determined such that a duration of time within each switching cycle of the converter that the phase leg conducts the current between the DC midpoint lead and the AC output lead is constrained to a pre-determined value.

4. The converter of any preceding claim, wherein the converter is a multi-phase converter comprising a plurality of phase legs (240, 254, 256), each of the plurality of phase legs being structurally similar comprising the midpoint duty cycle as a proportion of time within a switching cycle current is conducted between corresponding DC midpoint and the AC output leads, and wherein the plurality of control signals are determined such that a duration of time within each switching cycle of the multi-phase converter that the plurality of phase legs conduct current between the DC midpoint lead and the AC output lead is constrained to a same pre-determined value for all phase legs.

5. The converter of any preceding claim, wherein the plurality of control signals drive a reduction in a peak die temperature for the mid-upper switch, the mid-lower switch, the first clamping diode, and the second clamping diode during short circuit conditions.

6. The converter of any preceding claim, wherein the plurality of control signals drive a reduction in ampacity required for the mid-upper switch, the mid-lower switch, the first clamping diode, and the second clamping diode.

7. The converter of any preceding claim, wherein the converter comprises a multilevel neutral-point-clamped inverter connected to a DC power source (112) with the DC positive lead and the DC negative lead.

8. The converter of any preceding claim, wherein the controller reduces or cancels a midpoint current from the DC midpoint lead.

9. The converter of any preceding claim, wherein conduction losses for the first clamping diode and the mid-upper switch are reduced and shared with the mid-lower switch and the lower switch of the phase leg when the voltage reference and output current are both positive.

10. A power distribution system comprising:
a direct current, DC, power source (112) comprising a DC positive lead (128), a DC midpoint lead, and a DC negative lead (132);
a controller (210) providing a plurality of control signals;
a converter (205) as claimed in any preceding claim implementing a dual-reference three-level pulse width modulation (PWM) technique for constraining a midpoint duty cycle, the converter being electrically coupled to and operatively associated with the controller to receive the plurality of control signals.
